# EUROPEAN PATENT SPECIFICATION

(11) **EP 1 430 715 B1**
(45) Date of publication and mention of the grant of the patent: **27.10.2010**
(21) Application number: 02760500.5
(22) Date of filing: 29.08.2002
(51) Int. Cl.: H04N 5/76, G11B 20/00, G06F 1/00, G06T 1/00, H04N 5/913

(54) **METHOD AND DEVICE FOR PROVIDING CONDITIONAL ACCESS**
VORRICHTUNG UND VERFAHREN ZUR BEDINGTEN ZUGRIFFSERTEILUNG
PROCEDE ET DISPOSITIF DE MISE EN OEUVRE D'UN ACCES CONDITIONNEL

(30) Priority: 10.09.2001 EP 01203406
(43) Date of publication of application: 23.06.2004
(73) Proprietor: Koninklijke Philips Electronics N.V., 5621 BA Eindhoven (NL)
(72) Inventor: VAN DEN HEUVEL, Sebastiaan, A., F., A., NL-5656 AA Eindhoven (NL)
(74) Representative: Groenendaal, Antonius W. M.
(86) International application number: PCT/IB2002/003564
(87) International publication number: WO 2003/024099

(56) References cited:
- EP-A- 0 715 245
- EP-B1- 1 014 361
- WO-A-01/33317
- WO-A-98/33325
- US-A- 4 677 466

## Description

The invention relates to a method of providing conditional access to a content item. The invention further relates to a device arranged for providing conditional access to a content item.

Audio and video clips differ from other types of content items in that a consumer will typically want to consume the content item more than once. Furthermore, music and video clips, especially the more popular ones, are broadcasted many times on a wide variety of transmission channels. One of the fundamental characteristics of broadcasted content is that it uses a push model instead of a pull model. The content is broadcasted at times and in an order determined by the broadcaster, not the consumer. This results in different service providers broadcasting their choice of content simultaneously with each other.

It is possible to identify the content that is being broadcasted. A watermark with identifying information can be embedded in a content item. A signature or hash value can be computed from a received content item and compared against a database with signatures or hashes of various content items. Many other solutions, such as using metadata as specified by DVB, ATSC or TV-Anytime, are also available.

Audio, video and other content items can be protected against copying by a range of copy protection mechanisms here reference is made to EP 715 245 and EP 1014361. Most broadcast systems will not allow copying of the broadcasted information. However, usually it is allowed to delay the rendering of the content item until a time in the future. This is known as "time shifting". A consumer can program his television to record a movie being broadcast during the afternoon, and play it back in the evening.

A disadvantage of this approach is that the consumer still has to record a particular broadcast of the content item he wishes to see. If he misses it, he must wait until the next broadcast before it can be recorded. Further, the playback right will typically be one-time, so that he must record it twice if he wants to see it twice. This is rather inconvenient.

It is an object of the invention to provide a method according to the preamble, which provides a more flexible access to content items protected by rights management systems.

This object is achieved according to the invention in a method comprising monitoring a transmission channel for a subsequent transmission of a further specimen of the content item, collecting at least one right associated with the subsequent transmission, and storing the at least one right as a right associated with the stored specimen. The subsequent transmission comprises at least a right to play back the content item one time. This right to play back the content item once can be exercised at a later time.

So, effectively, a transmitted right associated with the content item of which a copy is stored are collected and stored associated with the stored specimen. The consumer can then exercise the collected rights at his leisure, instead of having to wait until the content has been broadcasted again.

In an embodiment collecting the at least one right comprises incrementing a counter indicative of the number of times the stored specimen may be played back. Many copy protection and rights management systems are based on the concept that a particular content item may be played back, or "checked out" in general, only a limited number of times. This is typically modeled using a counter associated with the stored specimen. Thus, a playback right received together with a subsequent transmission can be stored by simply increasing the counter.

In a variant of this embodiment the specimen is stored with said counter having an initial value of zero. Normally, it would make little sense to store a specimen of a content item without at least one playback right. However, since according to the invention playback rights are collected by monitoring a transmission channel, it now becomes useful to distribute a specimen for storing without immediately providing any playback rights.

It is a further object of the invention to provide a device according to the preamble, which provides a more flexible access to content items protected by rights management systems.

This object is achieved according to the invention in a device comprising a storage medium for storing a specimen of the content item, monitoring means for monitoring a transmission channel for a subsequent transmission of a further specimen of the content item, and rights collection means for collecting at least one right associated with the subsequent transmission and for storing the at least one right as a right associated with the stored specimen. The subsequent transmission comprises at least a right to play back the content item one time.

In an embodiment the transmission channel is a broadcast channel. While there are many different ways to transmit content items to receiving devices, broadcast media are the most likely to distribute content items in a manner compatible with the present invention.

In a further embodiment the monitoring means are arranged for computing a hash value for the further specimen of the content item being transmitted over the transmission channel and for comparing the hash value against a further hash value for the stored specimen. Successfully comparing the hash values identifies the transmitted specimen as being the same content item as the stored specimen. It is now no longer necessary for the content items being transmitted to comprise an identifier such as a watermark. This means that no extra measures need to be taken at the distributing side and that the invention now also works with content items that are not marked in any way.

In a further embodiment the monitoring means are arranged to simultaneously monitor multiple transmission channels for a subsequent transmission. This is particularly advantageous when the transmission channel is a digital transmission channel. In such a case different channels are often multiplexed or combined together in a single data stream that is broadcast or transmitted otherwise to the device in question.

In a further embodiment the device further comprises transfer means for transferring the stored specimen to a portable device together with the stored at least one right. Such transferring usually requires the presence of a right to copy the content, and of course a right to play back the content item on the portable device.

These and other aspects of the invention will be apparent from and elucidated with reference to the embodiments shown in the drawing, in which:
Fig. 1 schematically shows an embodiment of a device according to the invention, and
Fig. 2 schematically shows a second embodiment of the device.

Throughout the Figures, same reference numerals indicate similar or corresponding features. Some of the features indicated in the drawings are typically implemented in software, and as such represent software entities, such as software modules or objects.

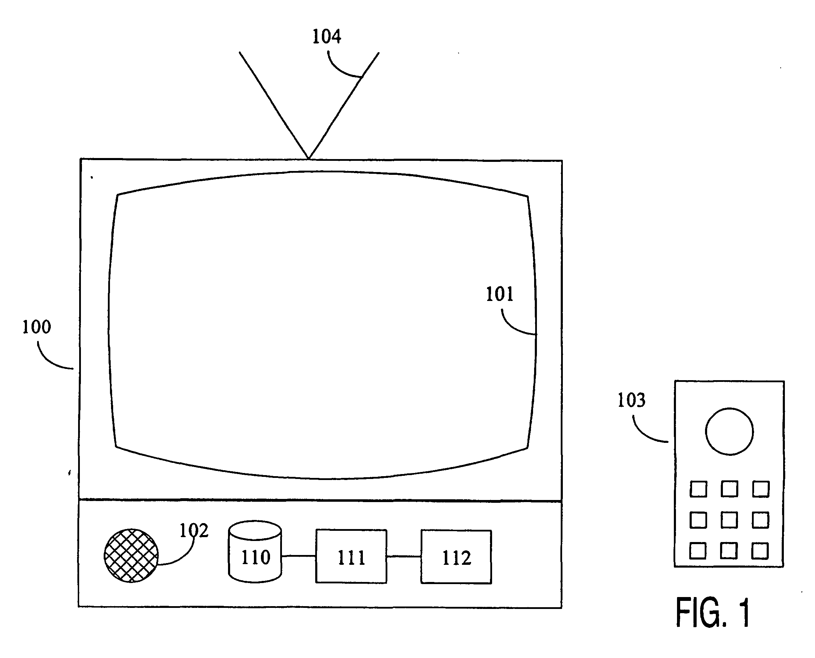

Fig. 1 schematically shows a device 100 arranged for rendering a content item. The device 100 can be for instance, a television, but may also be a radio, or another playback device. The content item may be a television program, a movie, a show, a radio program, or another piece of music, and so on.

The exact way in which a content item is rendered depends on the type of device and the type of content. For instance, in a radio receiver, rendering comprises generating audio signals and feeding them to loudspeakers. For a television receiver, rendering comprises generating audio and video signals and feeding those to a display screen and loudspeakers. For other types of content a similar appropriate action must be taken. Rendering may also include operations such as decrypting or descrambling a received signal, synchronizing audio and video signals and so on.

The device 100 comprises a display 101 and a loudspeaker 102 for outputting video and audio, respectively. Using an input device 103 such as a remote control, the consumer can navigate between the available content items and choose one for rendering. The content items are typically made available from an external source e.g. through antenna 104 or a cable network, but may also be available from a local source such as a video or DVD player connected to the device 100. Generally the content items are transmitted using a broadcast transmission medium.

In case the device 100 is a digital television receiver, the content items are often transmitted as separate data streams multiplexed or combined into a single transport stream that is transmitted to the device 100. However, in principle any transmission medium in which multiple content items can be transmitted can be used.

It is assumed that at least some of the content items being transmitted are transmitted together with one or more associated rights. For instance, a movie can be transmitted together with a right to play it back once, but not a right to store it on a storage medium, whereas a documentary could be provided with unlimited playback rights, and one right to store the documentary on a storage medium.

The content items being transmitted may be provided with an identifier. For example, a unique identifying code could be embedded in the content item by means of a watermark. A standardization body such as TV-Anytime is proposing a new signaling system that provides identifying information in the transmission of a content item. However, not all transmitted content items will have such an identifier for outputting video and audio, respectively.

A content item which the consumer wants to see more than once can be recorded on a storage medium 110. This storage medium 110 can be for instance a video recorder, a DVD-RW player/recorder, a hard disc built into the device 100 or another suitable storage medium. The content item may be recorded onto the storage medium 110 by recording it from a transmission received through e.g. antenna 104, but the storage medium 110 may also simply be a DVD disc on which the content item was recorded previously.

The device 100 may be equipped to determine kinds of content items that the consumer may be interested in. This is known as user profiling. By keeping track of content items which the consumer views, and employing an implicit and/or explicit rating system for such content items, it becomes possible to predict with varying degrees of accuracy which other content items the consumer may be interested in. It then becomes possible to automatically record content items which are likely to be of interest to the consumer. Such content items could then be recorded on the storage medium 110. Many techniques for user profiling are known in the art. Some examples are given below, although others could also be used instead. A combination of various techniques is also possible.

Co-pending US Patent Application Serial No. 09/666401 (Attorney Docket PHUS000239) by the same applicant as the present application describes a television programming recommender that generates television program recommendations based on a combined implicit/explicit program recommendation score.

Co-pending US Patent Application Serial No. 09/498271 (Attorney Docket PHUS000018) to the same applicant as the present application describes the use of a Bayesian classifier to compute the probability that a particular content item matches a particular profile.

Co-pending US Patent Application Serial No. 09/466406 (Attorney Docket PHA 23902) to the same applicant as the present application describes another technique, which utilizes inductive principles to identify a set of recommended programs that may be of interest to a particular viewer, based on past viewing behavior.

Once a content item has been recorded on the storage medium 110, a monitoring module 111 starts monitoring the various transmission for subsequent transmissions of the content item in question. When the content item is detected on a particular transmission channel, the monitoring module 111 activates a rights collection module 112. The rights collection module 112 then collects at least one right associated with the transmitted specimen of the content item and stores the collected rights on the storage medium 110 as a right associated with the stored content item.

In an embodiment, the monitoring module 111 monitors one single channel for subsequent transmissions of the content item stored on the storage medium 110. An improvement can be achieved by monitoring many channels simultaneously. Technologies as used in digital broadcast technology ease this by combining a number of different channels in a single broadcast stream, which can easily be monitored.

There are various ways in which the monitoring module 111 can determine that a particular transmission on a particular transmission channel comprises the same content item as the content item stored on the storage medium 110. If the transmission has a particular identifier, such as signaling information formatted in accordance with the TV-Anytime standard, then such a determination is a simple matter of comparing identifiers. The content item may also be identified through a UPC/EHN number. Information made available through an electronic program guide (EPG) can also be used to identify the content item.

The transmission may also be watermarked. The monitoring module 111 then needs to extract the watermark embedded in the transmission, extract an identifier from the watermark and compare that to an identifier stored in a watermark (or otherwise) in the stored specimen.

If no identifier, whether available directly or hidden in the transmission e.g. via a watermark, is available, the monitoring module 111 can determine a signature for the transmission and compare that signature against a further signature computed for the stored specimen. Various techniques exist for such a purpose, for example techniques for computing a robust hash of the content item. Typically, determining a signature involves identifying and extracting characteristic features or portions of the content item being hashed, and combining these characteristic features into a numerical value that can be easily compared against previously stored values. This way, small changes in different specimens of the content item will not produce different hash values.

United States Patent 4,677,466 discloses a known method of deriving a signature from a television signal. In this prior art method, the signature is derived from a short video or audio sequence after the occurrence of a specified event such as a blank frame. Another method of computing a robust hash value for a content item is described in European patent application serial number 01200505.4 (Attorney Docket PHNL010110) to the same applicant as the present application.

When the rights collection module 112 is activated it collects at least one right associated with the transmitted specimen. Preferably, this right is a right to play back the content item at least once. The right associated with the transmitted specimen does not have to be formatted in accordance with the same digital rights management system as the stored specimen, although this is preferable to keep system complexity low. The collected right is then stored on the storage medium 110 as a right associated with the stored specimen. The right may have limitations on the time in which the content item may be played back. Such limitations should be respected.

The rights may be bound to the particular transmission, for example by providing an identifier in the right that corresponds to an identifier in the transmission. The right could also indicate a particular transmission channel and time slot, which then indirectly refers to a particular transmission. The right might also identify the content item per se, and not a particular transmission. In the first two cases, it is debatable whether the rights may also be used with another specimen of the content item rather than the particular transmission. The last case poses no such problem.

To address any objections that right holders may have with collecting rights in the fashion described above in cases such as the first two mentioned in the previous paragraph, it is proposed to add a field to the right associated with the transmitted specimen. This field indicates whether the right may be used with another specimen of the content item. It could be implemented as a simple bit field, wherein the value 0 indicates collecting rights is permitted, and a value of 1 indicates that collecting is not permitted, or vice versa. The rights collection module 112 must then respect this field.

The right can be stored on the storage medium by simply maintaining a counter on the storage medium that is associated with the stored specimen. Every time a right associated with a transmitted specimen is collected, the counter is increased by one for every playback right collected. Every time the stored specimen is played back, the counter is decreased by one. Two techniques to perform rights management by using a counter are disclosed in international patent applications WO 01/33317 (Attorney Docket PHA 23829) and WO 98/33325 (Attorney Docket PHN 16372), both to the same applicant as the present application.

In an embodiment the specimen is stored with the associated counter having an initial value of zero. This allows a distributor to promote a particular content item such as a movie by making available record carriers such as DVDs comprising a copy of the content item but no playback rights. In order to play back this copy, a consumer would have to purchase playback rights. In accordance with the invention, a subsequent broadcast transmission of the content item of which a specimen is stored on the record carrier now allows a consumer to view the stored specimen once without first purchasing a playback right.

The stored specimen may also have been made available through a transmission medium and be recorded e.g. in accordance with a user profile. For example, a broadcaster may choose to broadcast movies during the night to television sets that are arranged to automatically record such movies on a local storage medium 110. The consumer can then choose at his leisure which movies to view and start viewing them immediately. This allows video on demand without a large amount of bandwidth being necessary to simultaneously broadcast many different movies. In accordance with the invention, such downloaded copies would be stored with the counter having an initial value of zero. The counter may also have an initial value of one if the specimen being stored was transmitted together with one right to play back.

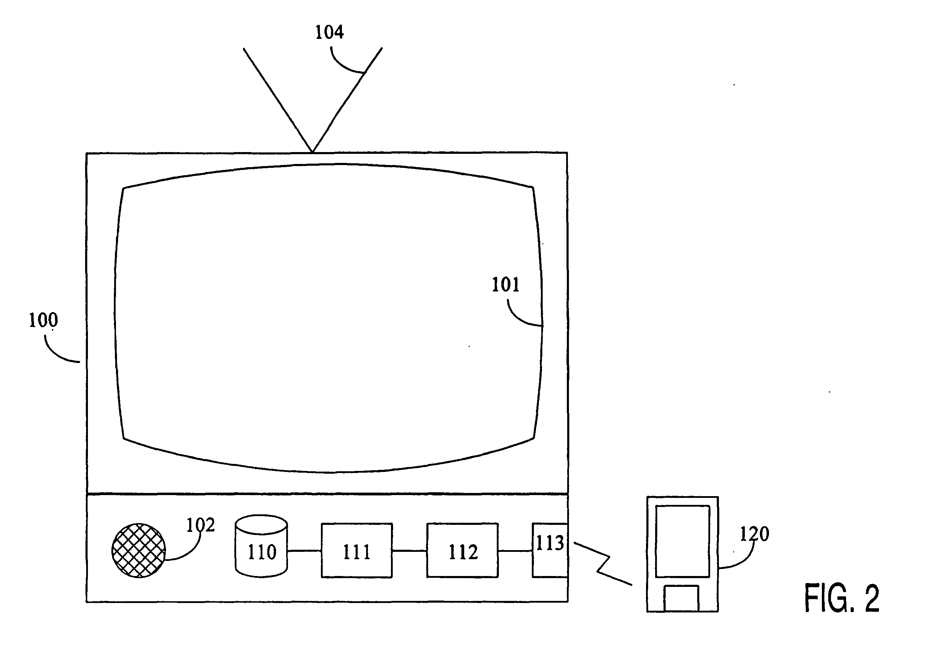

Fig. 2 schematically shows a second embodiment of the device 100. In this embodiment, the device 100 further comprises a transfer module 113. Using the transfer module 113, a content item stored on the storage medium 110 can be transferred to a portable device 120 such as a handheld television or a personal digital assistant. The user can then view the content item on the portable device 120 at a remote location. Together with the stored specimen of the content item, one or more rights to play back the content item also needs to be transferred to the portable device 120. This could be implemented simply by decreasing the counter associated with the stored specimen simultaneously with increasing such a counter in the portable device 120.

If a specimen of the content item of which a copy is stored on the storage medium 110 is already present in the portable device 120, then only one or more rights to play back the content item need to be transferred from the device 100 to the portable device 120. This way, the device 100 acts as a source for playback rights for other device. It is then no longer necessary to provide in the portable device 120 means for purchasing or obtaining otherwise playback rights, although this may still be desirable for other reasons.

The device 100 could also be interconnected with other devices. Examples of such interconnection would be some kind of access or in home network. Examples of such networks are IEEE 1394 (also called iLink or FireWire), Ethernet or some other IP network, infrared, some wireless technology like WirelessLan, HyperLan2 or Bluetooth. The stored rights could then be distributed over this network.

Also, the storage medium 110 may be present on another device connected to the network, rather than in the device 100. Further, different devices on the network could each monitor mutually different channels to increase the range and the number of rights collected. Also, depending on the exact definition of the rights management system, if multiple devices monitor the same broadcast channel multiple times, the number of playback rights collected may also be increased multiple times rather than once.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer.

In the device claim enumerating several means, several of these means can be embodied by one and the same item of hardware. The mere fact that certain measures are recited in mutually different dependent claims does not indicate that a combination of these measures cannot be used to advantage.

## Claims

1. A method of providing conditional access to a content item, a specimen of the content item being stored on a storage medium (110), the method **characterized in that** it comprises: monitoring a transmission channel for a subsequent transmission of a further specimen of the content item, wherein the subsequent transmission comprises at least a right to play back the content item one time, collecting at least one right associated with the subsequent transmission, and storing the at least one right as a right associated with the stored specimen.

2. The method of claim 1, in which collecting the at least one right comprises incrementing a counter indicative of the number of times the stored specimen may be played back.

3. The method of claim 2, whereby the specimen is stored on the storage medium (110) with said counter having an initial value of zero.

4. A device (100) arranged for providing conditional access to a content item, comprising a storage medium (110) for storing a specimen of the content item, **characterized in that** the device comprises: monitoring means (111) for monitoring a transmission channel for a subsequent transmission of a further specimen of the content item wherein the subsequent transmission comprises at least a right to play back the content item one time, and rights collection means (112) for collecting at least one right associated with the subsequent transmission and for storing the at least one right as a right associated with the stored specimen.

5. The device (100) of claim 4, whereby the transmission channel is a broadcast channel.

6. The device (100) of claim 4, the monitoring means (111) being arranged for computing a hash value for the further specimen of the content item being transmitted over the transmission channel and for comparing the hash value against a further hash value for the stored specimen.

7. The device (100) of claim 4, the monitoring means (111) being arranged to simultaneously monitor multiple transmission channels for the subsequent transmission.

8. The device (100) of claim 4, further comprising transfer means (113) for transferring the stored specimen to a portable device (120) together with the stored at least one right.

## Patentansprüche

1. Verfahren zur Erteilung eines bedingten Zugriffs auf ein Inhaltselement, wobei ein Muster des Inhaltselements auf einem Speichermedium (110) gespeichert ist, wobei das Verfahren **dadurch gekennzeichnet ist, dass** dieses die folgenden Schritte umfasst: Überwachen eines Übertragungskanals im Hinblick auf eine nachfolgende Übertragung eines weiteren Musters des Inhaltselements, wobei die nachfolgende Übertragung zumindest ein Recht zur einmaligen Wiedergabe des Inhaltselements, das Erheben von mindestens einem der nachfolgenden Übertragung zugeordneten Recht sowie das Speichern des mindestens einen Rechts als ein dem gespeicherten Muster zugeordneten Recht umfasst.

2. Verfahren nach Anspruch 1, wobei das Erheben des mindestens einen Rechts das Inkrementieren eines Zählers umfasst, womit angezeigt wird, wie viele Male das gespeicherte Muster wiedergegeben werden kann.

3. Verfahren nach Anspruch 2, wobei das Muster auf dem Speichermedium (110) bei einem Anfangswert Null des Zählers gespeichert wird.

4. Vorrichtung (100), die angeordnet ist, um einen bedingten Zugriff auf ein Inhaltselement zu erteilen, mit einem Speichermedium (110) zur Speicherung eines Musters des Inhaltselements, **dadurch gekennzeichnet, dass** die Vorrichtung Überwachungsmittel (111) zum Überwachen eines Übertragungskanals im Hinblick auf eine nachfolgende Übertragung eines weiteren Musters des Inhaltselements umfasst, wobei die nachfolgende Übertragung zumindest ein Recht zur einmaligen Wiedergabe des Inhaltselements umfasst, sowie Rechteerhebungsmittel (112) aufweist, um mindestens ein der nachfolgenden Übertragung zugeordnetes Recht zu erheben und das mindestens eine Recht als ein dem gespeicherten Muster zugeordnetes Recht zu speichern.

5. Vorrichtung (100) nach Anspruch 4, wobei es sich bei dem Übertragungskanal um einen Broadcast-Kanal handelt.

6. Vorrichtung (100) nach Anspruch 4, wobei die Überwachungsmittel (111) angeordnet sind, um einen Hash-Wert für das weitere Muster des Inhaltselements, welches über den Übertragungskanal übertragen wird, zu berechnen und den Hash-Wert mit einem weiteren Hash-Wert für das gespeicherte Muster zu vergleichen.

7. Vorrichtung (100) nach Anspruch 4, wobei die Überwachungsmittel (111) angeordnet sind, um mehrere Übertragungskanäle im Hinblick auf die nachfolgende Übertragung gleichzeitig zu überwachen.

8. Vorrichtung (100) nach Anspruch 4, die weiterhin Transfer-Mittel (113) umfasst, um das gespeicherte Muster zusammen mit dem gespeicherten, mindestens einen Recht zu einer portablen Vorrichtung (120) zu transferieren.

## Revendications

1. Procédé de mise en oeuvre d'un accès conditionnel à un article, un spécimen de l'article étant stocké sur un support de stockage (110), le procédé étant **caractérisé en ce qu'**il comprend : la surveillance d'un canal de transmission pour une transmission consécutive d'un autre spécimen de l'article, la transmission consécutive comprenant au moins un droit à lire l'article une fois, la collecte d'au moins un droit associé à la transmission consécutive et le stockage de l'au moins un droit en tant que droit associé au spécimen stocké.

2. Procédé selon la revendication 1, dans lequel la collecte de l'au moins un droit comprend l'incrémentation d'un compteur indicatif du nombre de fois où le spécimen stocké peut être lu.

3. Procédé selon la revendication 2, dans lequel le spécimen est stocké sur le support de stockage (110), ledit compteur ayant une valeur initiale de zéro.

4. Dispositif (100) conçu pour mettre en oeuvre un accès conditionnel à un article, comprenant un support de stockage (110) pour stocker un spécimen de l'article, **caractérisé en ce que** le dispositif comprend : des moyens de surveillance (111) pour surveiller un canal de transmission pour une transmission consécutive d'un autre spécimen de l'article, la transmission consécutive comprenant au moins un droit à lire l'article une fois, et des moyens de collecte de droits (112) pour collecter au moins un droit associé à la transmission consécutive et pour stocker l'au moins un droit en tant que droit associé au spécimen stocké.

5. Dispositif (100) selon la revendication 4, dans lequel le canal de transmission est un canal de diffusion.

6. Dispositif (100) selon la revendication 4, dans lequel les moyens de surveillance (111) sont conçus pour calculer un total mêlé pour l'autre spécimen de l'article transmis sur le canal de transmission et pour comparer le total mêlé à un autre total mêlé pour le spécimen stocké.

7. Dispositif (100) selon la revendication 4, dans lequel les moyens de surveillance (111) sont conçus pour surveiller simultanément des canaux de transmission multiples pour la transmission consécutive.

8. Dispositif (100) selon la revendication 4, comprenant en outre des moyens de transfert (113) pour transférer le spécimen stocké à un dispositif portable (120) conjointement avec l'au moins un droit stocké.
